# EUROPÄISCHE PATENTSCHRIFT

(11) **EP 0 633 363 B1**
(45) Veröffentlichungstag und Bekanntmachung des Hinweises auf die Patenterteilung: **11.12.1996**
(21) Anmeldenummer: 94109978.0
(22) Anmeldetag: 28.06.1994
(51) Int. Cl.: E03B 3/03

(54) **Behälter zum Sammeln von Regenwasser**
Container for the collection of rainwater
Conteneur pour la collecte d'eau pluviale

(30) Priorität: 08.07.1993 DE 4322706
(43) Veröffentlichungstag der Anmeldung: 11.01.1995
(73) Patentinhaber: WILO GmbH, D-44263 Dortmund (DE)
(72) Erfinder: Fölting, Georg, Dr.-Ing., D-45968 Gladbeck (DE); Schreckenberg, Stephan, Dipl.-Ing., D-44137 Dortmund (DE)
(74) Vertreter: COHAUSZ HASE DAWIDOWICZ & PARTNER

(56) Entgegenhaltungen:
- DE-A- 3 837 235
- DE-A- 4 036 598
- DE-U- 9 213 382
- DE-U- 9 304 950

## Beschreibung

Die Erfindung betrifft einen Behälter zum Sammeln von Regenwasser, an dem ein Regenwassereinlauf und eine Entnahmestelle angeschlossen ist, wobei der Innenraum durch eine Trennwand in zwei Kammern unterteilt ist, von denen die erste Kammer mit dem Regenwassereinlauf und die zweite Kammer mit der Entnahmestelle und einer Frischwassereinspeisung verbunden ist.

Ein derartiger Behälter ist aus DE-GM 93 04 950 bekannt.

Bei bekannten Regenwassersammelbehältern kann es geschehen, daß die Pumpe Schmutzteile ansaugt, die durch das Regenwasser in den Behälter eingebracht werden. Dies geschieht insbesondere dann, wenn ein stärkerer Regenwasserzulauf erfolgt und hierdurch am Boden befindliche Schmutzpartikel aufgewirbelt werden.

Bei einer Anschluß-Einheit mit automatischem Frischwasserzulauf für Regenwasser-Zisternen (DE-GM 93 04 950) ist ein Entnahmepuffer vorgesehen, der mit der Entnahmestelle und einer Frischwassereinspeisung verbunden ist und dem das Regenwasser über einen Zulauf mit Rückflußverhinderer aus der Zisterne zugeführt wird. Dadurch gelangt nur relativ sauberes Wasser in den Bereich der Entnahmestelle.

Die Ausbildung des Entnahmepuffers und der daran angeschlossenen Aggregate ist dabei aufwendig und relativ teuer. Außerdem ist es nicht möglich, daß bei größerem Regenwasserzufluß in die Zisterne genügend Wasser in kürzester Zeit durch einen einzigen Zulauf in den Entnahmepuffer gelangt. Dies ist insbesondere dann von Nachteil, wenn bei größerem Regenwasserzufluß größere Wassermengen durch die Entnahmeleitung abgeführt werden.

Aufgabe der Erfindung ist es, einen Behälter zum Sammeln von Regenwasser so zu verbessern, daß bei einfacher Konstruktion und Handhabung Schmutzpartikel weitgehend nicht in das Entnahmewasser gelangen und bei einem größeren Regenwasserzufluß genügend Wasser von der ersten zur zweiten Kammer fließen kann, und hierbei keine Schmutzpartikel zur zweiten Kammer gelangen.

Diese Aufgabe wird erfindungsgemäß dadurch gelöst, daß die senkrechte Trennwand nur die unteren Bereiche der zwei Kammern voneinander trennt und die oberen Kammerbereiche miteinander verbunden sind.

Durch eine solche Aufteilung in zwei Kammern können die durch das Regenwasser eingebrachten Schmutzpartikel sich in der ersten Kammer in Ruhe absetzen und es gelangt nur verhältnismäßig sauberes Wasser zur zweiten Kammer, aus der das Wasser zur weiteren Verwendung abgepumpt wird. Hierbei ist der Konstruktions- und Handhabungsaufwand sehr gering.

Außerdem ist sichergestellt, daß bei einem größeren Regenwasserzufluß genügend Wasser von der ersten zur zweiten Kammer fließen kann, und hierbei keine Schmutzpartikel zur zweiten Kammer gelangen. Ferner wird sichergestellt, daß bei der Nachspeisung nicht unnötig viel Nichtregenwasser verbraucht wird. Dadurch amortisiert sich die Anlage schneller.

Besonders vorteilhaft ist es, wenn in der Trennwand ein Rückschlagventil angeordnet ist, das Wasser nur von der ersten zur zweiten Kammer fließen läßt. Hierdurch wird verhindert, daß sauberes Nachspeisewasser zur ersten Kammer zurückfließen kann.

Besonders vorteilhaft ist es ferner, wenn die Größe der ersten Kammer ein Mehrfaches der Größe der zweiten Kammer ist, so daß in der ersten Kammer den Schmutzpartikeln genügend Zeit verbleibt, sich abzusetzen.

Um größere Regenwassermengen bei einfachster Konstruktion und geringstem Aufwand speichern zu können, wird vorgeschlagen, daß am Behälter weitere Behälter, insbesondere über dem Regenwassereinlauf angeschlossen sind, von denen zumindest einer einen Einlauf für Regenwasser besitzt. Hierbei kann der Anschluß eine Rückschlagklappe aufweisen.

Besonders vorteilhaft ist hierbei, wenn die weiteren Behälter zu beiden Seiten des ersten Behälters angeschlossen sind, so daß eine optimale Speicherung und Weitergabe erreichbar ist.

Vorzugsweise wird vorgeschlagen, daß an der Entnahmestelle eine Pumpe angeschlossen ist, die in einer Einbuchtung des Behälters einliegt. Eine solche Pumpe ist besonders gut zugänglich und dennoch optimal gegen Beschädigungen geschützt. Auch nimmt eine derart eingelassene Pumpe wenig Raum ein, d.h. die Außenabmessungen des Behälters werden durch die Pumpe nicht vergrößert. Auch ist von größtem Vorteil, wenn in der zweiten Kammer ein Sensor, insbesondere ein Schwimmer angeordnet ist, der bei niedrigstem Wasserstand in der zweiten Kammer für eine Nachspeisung von Frischwasser nur in der Kammer II sorgt.
Ausführungsbeispiele der Erfindung sind in den Zeichnungen dargestellt und werden im folgenden näher beschrieben. Es zeigen:
- Figur 1:: Eine Seitenansicht des Behälters mit teilweisem Schnitt.
- Figur 2:: Eine Draufsicht auf den Behälter mit teilweisem waagerechten Schnitt.
- Figur 3:: Mehrere nebeneinander angeordnete Behälter in einer ersten Anordnung.
- Figur 4:: Mehrere nebeneinander angeordnete Behälter in einer zweiten Anordnung und
- Figur 5:: mehrere nebeneinander angeordnete Behälter in einer dritten Anordnung.

Der Behälter 1 ist ein Kunststofftank mit einem Einlauf 2 für Regenwasser, wobei das Einlaufrohr 3 im oberen Bereich einen Überlauf 4a besitzt und innen bis kurz über den Boden des Behälters reicht.

Der Behälter ist in zwei Kammern I und II durch eine Zwischenwand 4 unterteilt, die nicht mittig im Behälter angeordnet ist, so daß die Kammer I, die den Einlauf 2 aufweist, erheblich größer ist als die Kammer II.

Die Kammer II weist im unteren Bereich eine Entnahmeöffnung 5 auf, die über ein Rohr 6 an eine Pumpe 7 angeschlossen ist. Die Pumpe 7 ist mit einem Membranbehälter 8 über einen Druckschalter 9 verbunden, so daß ein gleichmäßiger Druck erzeugbar ist, sowie große Schalthäufigkeiten der Pumpe vermieden werden.

In der Decke der Kammer II ist ein Frischwassereinspeiserohr 10 befestigt, an dem ein Ventil, insbesondere ein Magnetventil 11 angeordnet ist, das durch einen Schwimmerschalter 12 gesteuert wird. Sobald das Wasser in der Kammer II sehr tief abgesunken ist, öffnet der Schwimmerschalter 12 das Ventil 11, so daß in die Kammer II Frischwasser einströmt und damit sichergestellt ist, daß auch dann Wasser von der Pumpe gefördert wird, wenn nicht genügend Regenwasser nachkommt.
Die Zwischenwand 4 weist im unteren Bereich eine Durchströmöffnung 13 mit Rückschlagklappe oder -kugel auf, wobei die Öffnung 13 einen so großen Abstand zum Boden der Kammer I besitzt, daß abgesetzte Schmutzteile nicht durch die Öffnung 13 in die Kammer II gelangen können. Die Zwischenwand 4 reicht nicht bis zur Decke des Behälters 1, sondern die obere Kante der Zwischenwand 4 befindet sich etwa in mittlerer Höhe des Behälters, so daß bei größeren einfließenden Regenwassermengen diese durch die obere Kante der Zwischenwand 4 in die Kammer II fließen können.

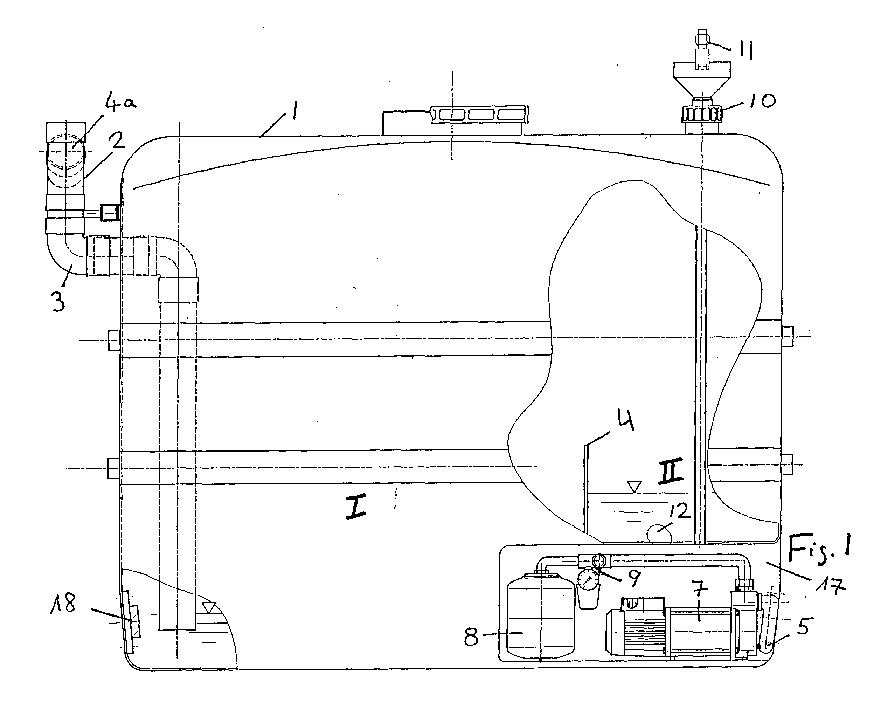

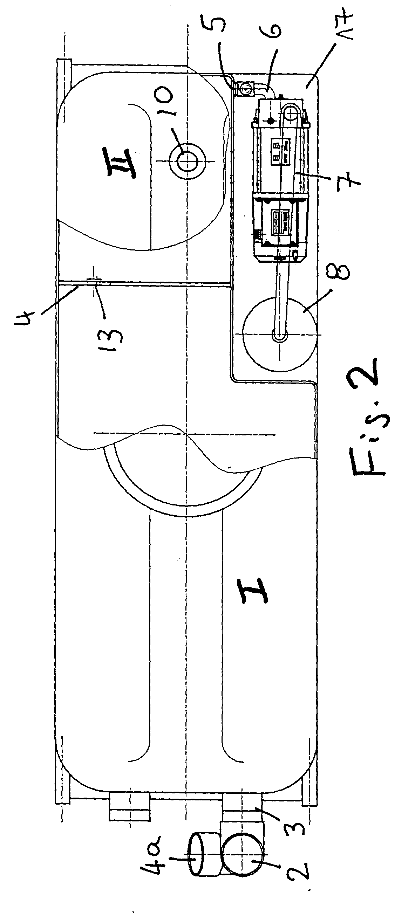

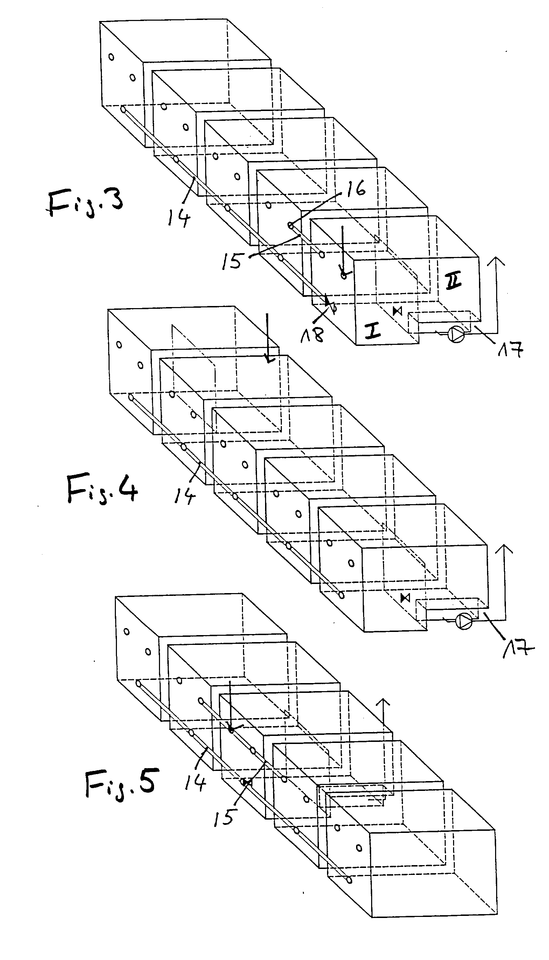

Neben dem, eine Trennwand 4 aufweisenden Hauptbehälter 1 können noch weitere Behälter 1a bis 1d bestehen, wobei im Ausführungsbeispiel nach Figur 3 keiner dieser weiteren Behälter eine Zwischenwand 4 besitzt. Die Behälter sind untereinander durch eine untere Verbindungsleitung 14 und eine Rückschlagklappe 18 verbunden, wobei zusätzlich vom ersten Behälter 1 im oberen Bereich eine Überlaufleitung 15 besteht, die mit einer Einlaßöffnung 16 des benachbarten Behälters 1a verbunden ist.

Diese Ausführung nach Figur 4 unterscheidet sich von der nach Figur 3 dadurch, daß der weitest entfernteste zusätzliche Behälter 4d auch eine Trennwand 4 besitzt, wobei die vom Auslaß entfernte Kammer I des Behälters 1d den Regenwassereinlaß besitzt.

Das Ausführungsbeispiel nach Figur 5 unterscheidet sich von den vorherigen dadurch, daß der erste Behälter 1, von dem das Wasser durch eine Pumpe entnommen wird, mittig angeordnet ist und zu beiden Seiten sich die weiteren Behälter 1a bis 1d befinden.

Ziel ist es, eine möglichst gute Durchströmung zu erzielen.
Die Pumpe 7 ist in einer Einbuchtung 17 des Behälters angeordnet, wobei diese Einbuchtung sich vorzugsweise im untersten Bereich an einer Ecke des Behälters befindet, so daß die in der Einbuchtung 17 befestigte Pumpe 7 von mindestens zwei Seiten zugänglich ist. In der Einbuchtung 17 befinden sich ferner noch das Rohr 6 und der Druckbehälter 8 und ein Druckschalter 9.

## Patentansprüche

1. Behälter (1) zum Sammeln von Regenwasser, an dem ein Regenwassereinlauf (2) und eine Entnahmestelle (5) angeschlossen ist, wobei der Innenraum durch eine Trennwand (4) in zwei Kammern (I, II) unterteilt ist, von denen die erste Kammer (I) mit dem Regenwassereinlauf und die zweite Kammer (II) mit der Entnahmestelle (5) und einer Frischwassereinspeisung (10) verbunden ist, **dadurch gekennzeichnet,** daß die senkrechte Trennwand (4) nur die unteren Bereiche der zwei Kammern (I, II) voneinander trennt und die oberen Kammerbereiche miteinander verbunden sind.

2. Behälter nach Anspruch 1, **dadurch gekennzeichnet,** daß in der Trennwand (4) ein Rückschlagventil (13) angeordnet ist, das Wasser nur von der ersten (I) zur zweiten Kammer (II) fließen läßt.

3. Behälter nach Anspruch 1 oder 2, **dadurch gekennzeichnet ,** daß die Größe der ersten Kammer (I) ein Mehrfaches der Größe der zweiten Kammer (II) ist.

4. Behälter nach einem der vorherigen Ansprüche, **dadurch gekennzeichnet** , daß am Behälter (1) weitere Behälter (1a-1d), insbesondere über dem Regenwassereinlauf (2) angeschlossen sind, von denen zumindest einer einen Einlauf (2) für Regenwasser besitzt.

5. Behälter nach Anspruch 4, **dadurch gekennzeichnet,** daß der Anschluß eine Rückschlagklappe (18) aufweist.

6. Behälter nach Anspruch 4 oder 5, **dadurch gekennzeichnet,** daß die weiteren Behälter (1a-1d) zu beiden Seiten des ersten Behälters (1) angeschlossen sind.

7. Behälter nach einem der vorherigen Ansprüche, **dadurch gekennzeichnet** , daß an der Entnahmestelle (5) eine Pumpe (7) angeschlossen ist, die in einer Einbuchtung (17) des Behälters einliegt.

8. Behälter nach Anspruch 7, **dadurch gekennzeichnet,** daß in der zweiten Kammer (II) ein Sensor (12), insbesondere ein Schwimmer angeordnet ist, der bei niedrigstem Wasserstand in der zweiten Kammer (II) für eine Nachspeisung von Frischwasser sorgt.

## Claims

1. Rain water collecting tank (1) with a rain water inlet (2) and a removal point (5) connected thereto, its interior being subdivided by means of a partition (4) into two chambers (I, II) of which the first (I) is connected to said rain water inlet while the second (II) is connected both to said removal point (5) and to a fresh water feeding means (10), **characterized in that** the vertical partition (4) separates only the lower regions of the two chambers (I, II) whereas the upper regions of the two chambers remain interconnected.

2. Tank as set forth in claim 1, **characterized in that** a non-return valve (13) is arranged in said partition (4) to allow water to flow from the first chamber (I) to the second chamber (II) only.

3. Tank as set forth in any of claims 1 or 2, **characterized in that** the size of said first chamber (I) is several times the size of said second chamber (II)

4. Tank as set forth in any of the preceding claims, **characterized in that** a plurality of additional tanks (1a - 1d) is connected to said tank (1), and particularly above said rain water inlet (2), with at least one of said additional tanks comprising a rain water inlet (2).

5. Tank as set forth in claim 4, **characterized** in that said connection comprises a non-return flap (18).

6. Tank as set forth in any of claims 4 or 5, **characterized in that** said additional tanks (1a - 1d) are connected to said first tank (1) on both sides thereof.

7. Tank as set forth in any of the preceding claims, **characterized in that** a pump (7) is connected to said removal point (5) and is located in a recess (17) provided in said tank.

8. Tank as set forth in claim 7, **characterized in that** a sensor (12), and particularly a float, is arranged in said second chamber (II) so as to ensure a fresh water replenishment when the water level in the second chamber (II) has reached its minimum.

## Revendications

1. Réservoir (1) pour reccueillir de l'eau pluviale, auquel sont raccordés une entrée d'eau pluviale (2) et un emplacement de soutirage (5), le volume intérieur étant divisé par une paroi séparatrice (4) en deux chambres (I,II) dont la première chambre (I) est reliée à l'entrée d'eau pluviale et la seconde chambre (II) à l'emplacement de soutirage (5) et à une alimentation en eau fraîche (10), caractérisé en ce que la paroi séparatrice verticale (4) ne sépare l'une de l'autre que les zones inférieures des deux chambres (I, II) et les zones supérieures sont reliées l'une à l'autre.

2. Réservoir selon la revendication 1,
caractérisé en ce qu'un clapet anti-retour (13), qui ne laisse couler l'eau que de la première chambre (I) vers la seconde (II), est disposé dans la paroi séparatrice (4).

3. Réservoir selon la revendication 1 ou 2,
caractérisé en ce que le volume de la première chambre (I) est un multiple du volume de la seconde chambre (II).

4. Réservoir selon l'une des revendications précédentes,
caractérisé en ce que, au réservoir (1) sont raccordés d'autres réservoirs (1a-1d), en particulier par l'intermédiaire de l'entrée d'eau pluviale (2), parmi lesquels au moins un possède une entrée (2) pour l'eau pluviale.

5. Réservoir selon la revendication 4,
caractérisé en ce que le raccordement présente un clapet anti-retour (18).

6. Réservoir selon la revendication 4 ou 5,
caractérisé en ce que les autres réservoirs (1a-1d) sont raccordés des deux côtés du premier réservoir (1).

7. Réservoir selon l'une des revendications précédentes,
caractérisé en ce qu'une pompe (7), qui est logée dans une échancrure (17) du réservoir, est raccordée à l'emplacement de soutirage (5).

8. Réservoir selon la revendication 7,
caractérisé en ce qu'un capteur (12), en particulier un flotteur, est disposé dans la seconde chambre (II) et assure une réalimentation d'eau fraîche dans le cas du niveau d'eau le plus bas dans la seconde chambre (II).
